# EUROPÄISCHE PATENTSCHRIFT

(11) **EP 3 798 668 B1**
(45) Veröffentlichungstag und Bekanntmachung des Hinweises auf die Patenterteilung: **13.03.2024**
(21) Anmeldenummer: 20177946.9
(22) Anmeldetag: 03.06.2020
(51) Int. Cl.: G01S 7/48, G01S 7/497, G01S 17/42, G01S 7/295, F16P 3/14

(54) **SENSOR**
SENSOR
CAPTEUR

(30) Priorität: 25.09.2019 DE 202019105315 U
(43) Veröffentlichungstag der Anmeldung: 31.03.2021
(62) Teilanmeldung aus: 20214071.1
(73) Patentinhaber: Leuze electronic GmbH + Co. KG, 73277 Owen/Teck (DE)
(72) Erfinder: Perchermeier, Julian, 80637 München (DE); Neumüller, Christian, 85229 Markt Indersdorf (DE); Wursthorn, Viktor, 72636 Frickenhausen (DE); Heckmayr, Alexander, 86807 Buchloe (DE); Sanzi, Friedrich, 73230 Kirchheim/Teck (DE); Feller, Bernhard, 86316 Friedberg (DE); Wendel, Simon, 73230 Kirchheim unter Teck (DE)
(74) Vertreter: Ruckh, Rainer Gerhard

(56) Entgegenhaltungen:
- DE-A1- 10 128 954
- DE-A1-102004 043 515
- US-A1- 2009 091 447
- US-A1- 2017 242 099

## Beschreibung

Die Erfindung betrifft einen Sensor gemäß dem Oberbegriff des Anspruchs 1.

Derartige Sensoren können als scannende Systeme ausgebildet sein, mittels derer Objekte in einem flächigen Überwachungsbereich geführt werden. Insbesondere können diese Sensoren als Flächendistanzsensoren ausgebildet sein, das heißt als distanzmessende scannende Systeme. Damit ist es möglich die Positionen von Objekten im Überwachungsbereich zu bestimmen.

Diese Sensoren können wenigstens einen Distanzsensor mit einem Sendestrahlen emittierenden Sender und einem Empfangsstrahlen empfangenden Empfänger umfassen. Weiterhin ist eine Ablenkeinheit vorgesehen, mittels derer die Sendestrahlen periodisch in einem Abtastbereich abgelenkt werden. Typischerweise führt die Ablenkeinheit eine Drehbewegung aus, durch welche die Sendestrahlen in einem in einer Ebene liegenden Abtastbereich geführt sind. Zur Positionsbestimmung von Objekten im Abtastbereich werden die aktuell mit dem Distanzsensor ermittelten Entfernungswerte sowie die aktuellen Ablenkpositionen der Sendestrahlen verwendet, die insbesondere mittels eines Winkelgebers bestimmt werden.

Diese Sensoren können für Schutzfeldüberwachungen eingesetzt werden. In diesem Fall generieren die Sensoren als Objektfeststellungssignal ein binäres Schaltsignal, das angibt ob sich ein Objekt im Schutzfeld befindet oder nicht. Typische Anwendungsbereiche derartiger Sensoren sind Gefahrenbereichsüberwachungen.

Das jeweilige Schutzfeld wird vorteilhaft applikationsspezifisch vorgegeben. Typischerweise kann ein Benutzer die Schutzfelddaten über eine Eingabeeinheit in den Sensor eingeben.

Bei Sensoren mit komplexen Optik-Aufbauten, insbesondere dann, wenn der Sender so zur Ablenkeinheit positioniert ist, dass die Strahlachse der Sendestrahlen nicht mit der Drehachse der Ablenkeinheit zusammenfällt, kann zur Auswertung der Messwerte und insbesondere zur Generierung eines Objektfeststellungssignals ein beträchtlicher Rechenaufwand erforderlich sein. Dieses Problem wird dadurch noch vergrößert, dass mit den Sensorkomponenten des Sensors in sehr kurzen Zeitintervallen viele Messwerte generiert werden, die möglichst verzögerungsfrei ausgewertet werden müssen.

Dabei ist insbesondere nachteilig, dass das Schutzfeld in einem bedienerfreundlichen Benutzerkoordinatensystem vorgegeben wird, jedoch die Messwerte nicht in diesem Benutzerkoordinatensystem vorliegen, was fortlaufende Umrechnungen der Messwerte erforderlich macht. Insbesondere können die Messwerte in zeitabhängigen Koordinatensystemen vorliegen. Dies führt zu einer weiteren Erhöhung des Rechenaufwands.

Weiterhin ist nachteilig, dass die vom Sensor generierten Messwerte mit systematischen Fehlern behaftet sein können. Derartige Messfehler können beispielsweise durch einen nicht exakten Einbau von Sensorkomponenten im Sensor bedingt sein.

Die US 2017/0242099 A1 betrifft einen Sicherheitsscanner mit einem Distanzmesselement, das optisch die Distanzen von Objekten ermittelt. Zudem ist eine Ablenkeinheit zum Ablenken von Lichtstrahlen des Distanzmesselements vorgesehen. Zur Positionsbestimmung von Objekten werden Distanzmesswerte abhängig zu der Ablenkposition der Lichtstrahlen ermittelt. Diese Messdaten werden in einem Benutzerkoordinatensystem zur Verfügung gestellt und auf einem Bildschirm einer Rechnereinheit dargestellt.

Die DE 101 28 954 A1 betrifft ein Verfahren zur Bereitstellung korrigierter Daten zur Erzeugung eines Modells eines Überwachungsbereichs, der in jeweiligen Sichtbereichen von mindestens zwei optoelektronischen Sensoren, insbesondere Laserscanner, zur Bestimmung der Lage von erfassten Gegenständen liegt und Gegenstandspunkte enthält, auf der Basis von Mengen von Gegenstandspunkten in dem Überwachungsbereich entsprechenden Rohdatenelementen. Die Mengen von Rohdatenelementen sind jeweils von einem der Sensoren bei einer Abtastung seines Sichtbereichs erfasst und diesem zugeordnet. Die Mengen von Rohdatenelementen verschiedener Sensoren bilden mit einer bestimmten zeitlichen Zuordnung zueinander eine Gruppe, wobei die Rohdatenelemente der Mengen zumindest die Koordinaten von von dem zugeordneten Sensor erfassten Gegenstandspunkten jeweils in Bezug auf die Lage des erfassenden Sensors umfassen.

Zur Bildung von den Mengen von Rohdatenelementen der Gruppe entsprechenden korrigierten Mengen korrigierter Datenelemente werden für jede Menge der Gruppe die in den Rohdatenelementen enthaltenen Koordinaten unter Berücksichtigung der Relativlage der jeweiligen Sensoren in ein gemeinsames Koordinatensystem transformiert.

Die DE 10 2004 043 515 A1 beschreibt ein Verfahren zum Erfassen eines Objekts innerhalb eines Überwachungsbereichs, bei dem zumindest zwei Sensoren jeweils mindestens einen Teil des Überwachungsbereichs überwachen. Jeder Sensor erzeugt ein digitales Einzelabbild des gesamten Überwachungsbereichs, wobei die Einzelabbilder aller Sensoren in einem einheitlichen Koordinatensystem erzeugt werden. Von jedem Sensor werden diejenigen Koordinatenpunkte der Einzelabbilder als "sicher" gekennzeichnet, die er als frei von dem Objekt erkennt, wobei alle anderen Koordinatenpunkte der Einzelabbilder als "unsicher" gekennzeichnet werden. Die derart erzeugten Einzelabbilder werden jeweils zu einer Auswerteeinheit übertragen und die übertragenen Einzelabbilder werden von der Auswerteeinheit entsprechend ihren gemeinsamen Koordinatensystemen zu einem resultierenden Gesamtabbild überlagert, indem diejenigen Koordinatenpunkte des Gesamtabbilds als "sicher" gekennzeichnet werden, die zumindest in einem der von den Sensoren übertragenen Einzelabbildern als sicher gekennzeichnet sind, während alle anderen Koordinatenpunkte des Gesamtabbilds als unsicher gekennzeichnet werden. Letztlich werden die im Gesamtabbild als unsicher gekennzeichneten Koordinatenpunkte zur Bestimmung der Objektkoordinaten verwendet.

Die US 2009/0091447 A1 betrifft einen Flächendistanzsensor mit einem Laserstrahlen emittierenden Distanzsensor und einer Ablenkeinheit zur Ablenkung der Laserstrahlen.

Der Erfindung liegt die Aufgabe zugrunde einen Sensor der eingangs genannten Art bereitzustellen, welcher bei geringem konstruktivem Aufwand eine hohe Funktionalität aufweist.

Zur Lösung dieser Aufgabe sind die Merkmale der unabhängigen Ansprüche vorgesehen. Vorteilhafte Ausführungsformen sind in den abhängigen Ansprüchen beschrieben.

Die Erfindung betrifft einen Sensor zur Erfassung von Objekten innerhalb eines Schutzfeldes mit Sensorkomponenten zur Objekterfassung und mit einer Auswerteeinheit zur Auswertung von Messwerten der Sensorkomponenten. Die Messwerte der Sensorkomponenten liegen in wenigstens einem Messkoordinatensystem vor. Das Schutzfeld ist in einem Benutzungskoordinatensystem vorgebbar. In der Auswerteeinheit oder in einer Eingabeeinheit wird das Schutzfeld von dem Benutzerkoordinatensystem in das wenigstens eine Messkoordinatensystem umgerechnet. Für eine Erfassung von Objekten innerhalb des Schutzfelds wird in der Auswerteeinheit ein Vergleich von Messwerten der Sensorkomponenten mit Schutzfelddaten des Schutzfelds in dem wenigstens einen Messkoordinatensystem durchgeführt.

Der erfindungsgemäße Sensor ist generell für eine Schutzfeldüberwachung ausgebildet. Mit einem derartigen Sensor können insbesondere Gefahrenbereiche an Maschinen oder Anlagen überwacht werden. Auch ist es möglich, den Sensor an einem Fahrzeug anzubringen, so dass innerhalb eines Schutzfelds das Vorfeld des Fahrzeugs überwacht werden kann. Für den Einsatz im Bereich der Sicherheitstechnik ist der Sensor als Sicherheitssensor ausgebildet, der einen fehlersicheren Aufbau aufweist. Der fehlersichere Aufbau wird insbesondere durch eine redundante Auswerteeinheit realisiert.

Der erfindungsgemäße Sensor ist vorteilhaft ein scannender Sensor, insbesondere ein Flächendistanzsensor.

Vorteilhaft weist der Sensor wenigstens einen Sendestrahlen emittierenden Sender, wenigstens einen Empfangsstrahlen empfangenden Empfänger und eine Ablenkeinheit zur periodischen Ablenkung der Sendestrahlen in einem Abtastbereich auf.

Durch die Ablenkeinheit werden die Sendestrahlen periodisch in einem Winkelbereich abgelenkt. Für die einzelnen Winkelpositionen werden Messwerte, insbesondere Distanzwerte generiert. Durch die Erfassung der aktuellen Winkelpositionen mit einem Winkelgeber und die ermittelten Distanzwerte können Positionen von Objekten bestimmt werden.

Prinzipiell kann der Sensor als Radarsensor oder dergleichen ausgebildet sein. Besonders vorteilhaft ist der Sensor als optischer Sensor ausgebildet.

Das Schutzfeld wird vorteilhaft für die jeweilige Applikation spezifisch vorgegeben. Auch können mehrere Schutzfelder vorgesehen sein, die vorteilhaft im Sensor abgespeichert sein können, so dass entsprechend den aktuellen Anforderungen das jeweils geeignete Schutzfeld aktiviert wird.

Die Schutzfelder werden typischerweise in einem Konfigurations- oder Einlernprozess definiert, wobei erfindungsgemäß das oder die Schutzfelder in einem Benutzerkoordinatensystem vorgegeben sind.

Beispielsweise sind das oder die Schutzfelder über eine Eingabeeinheit eingebbar.

Alternativ können das oder die Schutzfelder abhängig von Parameterwerten in der Auswerteeinheit berechnet werden.

Die Darstellung des oder der Schutzfelder in dem Benutzerkoordinatensystem ermöglicht einem Benutzer eine einfache visuelle Anzeige und auch Kontrollmöglichkeit. Eine besonders benutzerfreundliche Darstellung ergibt sich, wenn das Benutzerkoordinatensystem ein kartesisches Koordinatensystem oder ein Polarkoordinatensystem ist.

Dabei ist ein Schutzfeld generell durch Schutzfeldgrenzen definiert, die dieses Schutzfeld begrenzen. Zweckmäßig ist das oder jedes Schutzfeld im Benutzerkoordinatensystem mit äquidistanten Winkelschritten vorgegeben.

Als ein Schutzfeld kennzeichnende Schutzfelddaten liegen somit eine Vielzahl an Wertepaaren von Schutzfeldgrenzen und zugeordneten Winkelwerten vor.

Während das oder die Schutzfelder beziehungsweise deren Schutzfelddaten in dem Benutzerkoordinatensystem vorliegen, liegen die bei der Objekterkennung mit den Sensorkomponenten des Sensors generierten Messdaten in wenigstens einem Messkoordinatensystem vor, das von dem Benutzerkoordinatensystem verschieden ist.

Aufgrund dessen können die Messdaten nicht direkt mit den Schutzfelddaten in Beziehung gesetzt werden, um zu prüfen, ob sich ein detektiertes Objekt im Schutzfeld befindet oder nicht.

Erfindungsgemäß wird daher in der Auswerteeinheit oder in der Eingabeeinheit einmalig das Schutzfeld von dem Benutzerkoordinatensystem in das wenigstens eine Messkoordinatensystem umgerechnet. Durch diese Umrechnung liegen insbesondere die Schutzfeldgrenzen des Schutzfelds winkelabhängig im Messkoordinatensystem vor.

Während des folgenden Sensorbetriebs können dann ermittelte Messwerte direkt mit den Schutzfelddaten im Messkoordinatensystem in Beziehung gesetzt werden, um zu prüfen, ob ein Objekt im Schutzfeld vorhanden ist. Da hierzu keine weiteren Koordinatentransformationen mehr notwendig sind, kann diese Auswertung ohne großen Rechenaufwand erfolgen.

Besonders einfach gestaltet sich die Auswertung wenn jeder Messwert, der für eine bestimmte Winkelposition erfasst wird, mit der zugehörigen Schutzfeldgrenze verglichen wird.

Mit dieser Auswertung wird in der Auswerteeinheit schnell und ohne großen Rechenaufwand festgestellt ob sich ein Objekt im Schutzfeld befindet und abhängig hiervon ein Objektfeststellungssignal generiert wird, das als Messausgangssignal vom Sensor ausgegeben wird. Vorteilhaft ist das Objektfeststellungssignal ein binäres Schaltsignal, dessen Schaltzustände angeben, ob sich ein Objekt im Schutzfeld befindet oder nicht.

Im einfachsten Fall ist bei dem Sensor nur ein Messkoordinatensystem vorhanden. In diesem Fall erfolgt eine Umrechnung von Schutzfelddaten von dem Benutzerkoordinatensystem in das eine Messkoordinatensystem. Generell können insbesondere bei komplexeren Sensoren auch mehrere Messkoordinatensysteme vorgesehen sein. In diesem Fall werden die Schutzfelddaten von dem Benutzerkoordinatensystem in die einzelnen Messkoordinatensysteme umgerechnet.

Für den Fall, dass ein Schutzfeld durch diskrete Schutzfelddaten, insbesondere Paare von Schutzfeldgrenzen und Winkelwerten definiert ist, werden diese von dem Benutzerkoordinatensystem in das oder die Messkoordinatensysteme umgerechnet.

Vorteilhaft wird mit dieser Koordinatentransformation eine Interpolation der in das Messkoordinatensystem umgerechneten Schutzfelddaten durchgeführt, damit die Schutzfeldgrenze nicht als eine diskrete Punktfolge sondern als eine durchgängige Linie vorliegt. Damit liegt für jeden im Messkoordinatensystem ermittelten Messwert eine zugehörige Schutzfeldgrenze vor, mit der der Messwert verglichen werden kann.

Gemäß einer besonders vorteilhaften Ausführungsform werden bei einer Transformation von Messwerten von dem wenigstens einen Messkoordinatensystem in das Benutzerkoordinatensystem Messfehler korrigiert.

Vorteilhaft sind Messfehler in wenigstens einer Korrekturtabelle hinterlegt, welche in die Transformation der Messwerte von dem wenigstens einen Messkoordinatensystem in das Benutzerkoordinatensystem einbezogen ist.

Derartige Messfehler können sich durch einen fehlerhaften Einbau von Komponenten des Sensors ergeben. Wird zum Beispiel der Sender versetzt zu seiner Sollposition eingebaut ergibt sich ein fehlerhafter Offset der Messwerte. Gleiches gilt, wenn zum Beispiel eine einen Winkelgeber bildende Encoderscheibe mit einem Versatz zur Solllage eingebaut wird. Auch können elektronisch vorgegebene Zeitnullpunkte für durchzuführende Distanzmessungen mit einem fehlerhaften Offset versehen sein.

Durch Einmessvorgänge können derartige Messfehler erfasst werden und mittels Korrekturtabellen eliminiert werden.

Die Erfindung wird im Folgenden anhand der Zeichnungen erläutert. Es zeigen:
- Figur 1: Schematische Darstellung eines Ausführungsbeispiels des erfindungsgemäßen Sensors.
- Figur 2: Einzeldarstellung eines Schutzfelds für den erfindungsgemäßen Sensor.
- Figur 3: Ausführungsbeispiel einer Ablenkeinheit mit zwei zugeordneten Sendern für den erfindungsgemäßen Sensor.

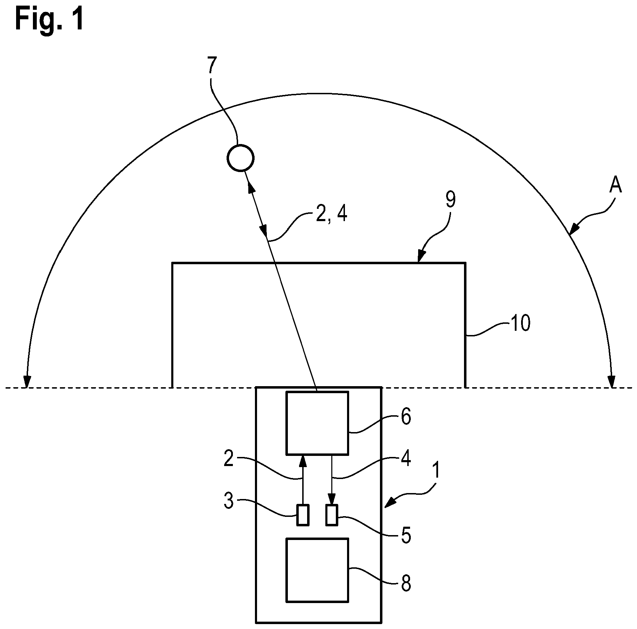

Figur 1 zeigt in einer stark schematisierten Darstellung ein Ausführungsbeispiel des erfindungsgemäßen Sensors 1. Der Sensor 1 ist generell für eine Schutzfeldüberwachung ausgebildet und kann insbesondere für Gefahrenbereichsüberwachung an Maschinen, Anlagen, Fahrzeugen und dergleichen eingesetzt werden.

Der Sensor 1 ist als scannender Sensor 1 ausgebildet, im vorliegenden Fall als Flächendistanzsensor. Prinzipiell kann der Sensor 1 als Radarsensor oder dergleichen ausgebildet sein. Im vorliegenden Fall ist der Sensor 1 als optischer Sensor 1 ausgebildet.

Der Sensor 1 gemäß Figur 1 weist Distanzsensorelemente derart auf, dass dieser im vorliegenden Fall nach einem Impuls-Laufzeit-Verfahren arbeitet. Prinzipiell können die Distanzmessungen auch nach einem Phasenmessverfahren erfolgen.

Der Sensor 1 weist im vorliegenden Fall nur ein Distanzsensorelemente mit einem Sendelichtstrahlen 2 emittierenden Sender 3 und einem Empfangslichtstrahlen 4 empfangenden Empfänger 5 auf. Generell können auch mehrere Distanzsensorelemente vorgesehen sein.

Der Sensor 1 umfasst weiterhin eine Ablenkeinheit 6 mit der die Sendelichtstrahlen 2 periodisch innerhalb eines Abtastbereichs A geführt sind, der sich im vorliegenden Fall über einen Winkelbereich von 180° erstreckt. Die Ablenkeinheit 6 kann aus einer motorisch getriebenen Drehspiegelanordnung oder dergleichen bestehen. Mittels eines nicht dargestellten Winkelgebers wird die aktuelle Ablenkposition der Ablenkeinheit 6 und damit der Sendelichtstrahlen 2 ermittelt.

Mit dem Distanzsensorelement wird die Distanz eines Objekts 7 zum Sensor 1 ermittelt, in dem die Lichtlaufzeit von pulsförmigen Sendelichtstrahlen 2 zum Objekt 7 und zurück (als Empfangslichtstrahlen 4) vom Empfänger 5 ermittelt wird. Zusammen mit der mittels des Winkelgebers ermittelten Ablenkposition der Sendelichtstrahlen 2 kann so in einer Auswerteeinheit 8 des Sensors 1 die Position des Objekts 7 ermittelt werden.

Erfindungsgemäß ist in der Auswerteeinheit 8 ein Schutzfeld 9 vorgegeben. Generell können in der Auswerteeinheit 8 auch mehrere Schutzfelder 9 vorgegeben sein, so dass je nach Anforderung an die jeweilige Applikation ein geeignetes Schutzfeld 9 aktiviert wird.

In der Auswerteeinheit 8 wird anhand der ermittelten Positionswerte geprüft, ob ein Objekt 7 im Schutzfeld 9 vorhanden ist. Dementsprechend wird in der Auswerteeinheit 8 als Objektfeststellungssignal ein binäres Schaltsignal generiert, dessen Schaltzustände angeben, ob sich ein Objekt 7 innerhalb des Schutzfelds 9 befindet oder nicht.

Der Sensor 1 kann insbesondere ein Sicherheitssensor sein, der zur Gefahrenbereichsüberwachung an einer Anlage wie einer Maschine oder einem Fahrzeug eingesetzt wird. Zur Erfüllung der hierfür geltenden Sicherheitsanforderungen weist der Sicherheitssensor einen fehlersicheren Aufbau auf. Insbesondere weist die Auswerteeinheit 8 einen redundanten Aufbau auf, beispielsweise in Form von zwei sich gegenseitig zyklisch überwachenden Recheneinheiten.

Das Schaltsignal wird an eine Steuereinheit der Anlage ausgegeben. Liegt ein gefährlicher Zustand vor, das heißt wird mit dem Schaltsignal ein Objekt 7 im Schutzfeld 9 signalisiert, überführt die Steuereinheit die Anlage in einen sicheren Zustand, wobei insbesondere die Anlage abgeschaltet wird.

Das im Sensor 1 aktivierte Schutzfeld 9 liegt in einem Benutzerkoordinatensystem vor. Dieses Benutzerkoordinatensystem unterscheidet sich zum Messkoordinatensystem des Sensors 1, dessen Ursprung zum Beispiel am Ort des Senders 3 liegt. Das Benutzerkoordinatensystem kann vorteilhaft von einem kartesischen Koordinatensystem oder einem Polarkoordinatensystem gebildet sein.

Das Schutzfeld 9 wird vorzugsweise benutzerspezifisch vorgegeben. Insbesondere kann das Schutzfeld 9 über eine nicht dargestellte Eingabeeinheit in den Sensor 1, insbesondere dessen Auswerteeinheit 8 eingegeben werden. Alternativ werden das oder die Schutzfelder 9 abhängig von Parameterwerten in der Auswerteeinheit 8 berechnet.

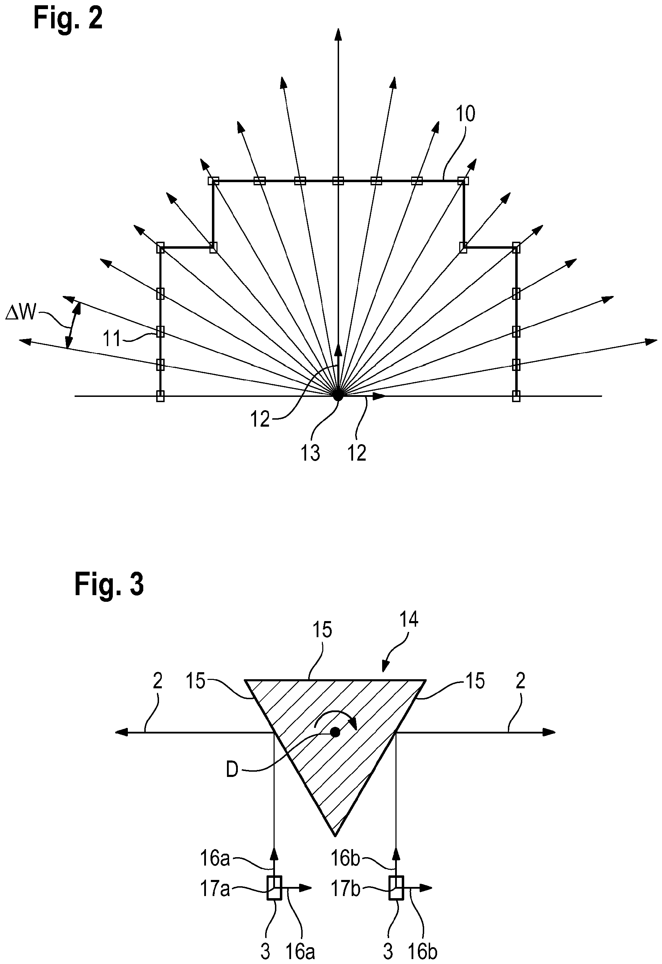

Zu Beginn des Sensorbetriebs wird in der Auswerteeinheit das Schutzfeld 9 vom Benutzerkoordinatensystem in das Messkoordinatensystem umgerechnet. Alternativ kann die Umrechnung während der Konfiguration des Sensors 1 in der Eingabeeinheit erfolgen. Damit liegen insbesondere die Schutzfeldgrenzen 10 des Schutzfelds 9 im Messkoordinatensystem vor. Damit wird der Rechenaufwand in der Auswerteeinheit 8 zur Ermittlung, ob ein Objekt 7 im Schutzfeld 9 vorhanden ist, erheblich vereinfacht. Hierzu müssen lediglich für einzelne Winkelpositionen ermittelte Distanzwerte mit dem dieser Winkelposition zugeordneten Wert 11 der Schutzfeldgrenze 10 des Schutzfelds 9 verglichen werden (Figur 2).

Vorteilhaft werden bei dem Koordinatensystem nur diskrete Werte 11 des Schutzfelds 9, insbesondere Werte 11 der Schutzfeldgrenze 10 vom Benutzerkoordinatensystem in das Messkoordinatensystem umgerechnet. Um auch im Messkoordinatensystem eine durchgehende Schutzfeldgrenze 10 zu schaffen, erfolgt eine Interpolation zwischen den diskreten Werten 11 der Schutzfeldgrenze 10.

Dies ist beispielhaft in Figur 2 dargestellt. Figur 2 zeigt ein Schutzfeld 9 im Benutzerkoordinatensystem, wobei in Figur 2 die Koordinatenachsen 12 und der Ursprung 13 des Benutzerkoordinatensystems dargestellt sind, das im vorliegenden Fall von einem kartesischen Koordinatensystem gebildet ist.

In einem äquidistanten Winkelraster ΔW sind für einzelne diskrete Winkelwerte die Werte 11 der Schutzfeldgrenze 10 definiert. Diese Werte 11 der Schutzfeldgrenze 10 werden von dem Benutzerkoordinatensystem in das Messkoordinatensystem umgerechnet, wobei dort möglicherweise die Werte 11 nicht mehr in äquidistanten Winkelschritten vorliegen.

Weiterhin können bei einer Transformation von Messwerten von dem wenigstens einen Messkoordinatensystem in das Benutzerkoordinatensystem Messfehler korrigiert werden.

Hierzu sind Messfehler in wenigstens einer Korrekturtabelle hinterlegt, welche in die Transformation der Messwerte von dem wenigstens einen Messkoordinatensystem in das Benutzerkoordinatensystem einbezogen ist.

Figur 3 zeigt eine Variante der optoelektronischen Komponenten für den Sensor 1 gemäß Figur 1.

Bei der Ausführungsform gemäß Figur 3 ist als Ablenkeinheit 6 ein um eine Drehachse D rotierender Polygonspiegel 14 mit drei Spiegelflächen 15 vorgesehen.

Der Sensor 1 weist im vorliegenden Fall zwei Distanzsensorelemente auf, von denen lediglich die Sender 3 dargestellt sind. Die Sender 3 sind der Ablenkeinheit 6 so zugeordnet, dass die Sendelichtstrahlen 2 der Sender 3 an benachbarten Spiegelflächen 15 umgelenkt werden. Durch die Drehbewegung der Ablenkeinheit 6 werden die Sendelichtstrahlen 2 periodisch jeweils in einem Abtastbereich A geführt.

Im vorliegenden Fall sind zwei Messkoordinatensysteme vorgesehen, wobei jedem Sender 3 ein Messkoordinatensystem zugeordnet ist. In Figur 3 sind die Koordinatenachsen 16a, b und die Ursprünge 17 a, b dieser Messkoordinatensysteme dargestellt.

In diesem Fall wird vor Aufnahme des Sensorbetriebs das aktivierte Schutzfeld 9 aus dem Benutzerkoordinatensystem in die beiden Messkoordinatensysteme umgerechnet, so dass zur Objektdetektion innerhalb jedes Messkoordinatensystems für eine Winkelposition ermittelt wird, ob ein erfasster Distanzwert innerhalb der Schutzfeldgrenze 10 liegt.

### Bezugszeichenliste

- (1): Sensor
- (2): Sendelichtstrahl
- (3): Sender
- (4): Empfangslichtstrahl
- (5): Empfänger
- (6): Ablenkeinheit
- (7): Objekt
- (8): Auswerteeinheit
- (9): Schutzfeld
- (10): Schutzfeldgrenze
- (11): Wert
- (12): Koordinatenachse
- (13): Ursprung
- (14): Polygonspiegel
- (15): Spiegelfläche
- (16a,b): Koordinatenachse
- (17a,b): Ursprung
- (A): Abtastbereich
- (D): Drehachse
- (ΔW): Winkelraster

## Patentansprüche

1. Sensor (1) zur Erfassung von Objekten (7) innerhalb eines Schutzfelds (9), mit Sensorkomponenten zur Objekterfassung und mit einer Auswerteeinheit (8) zur Auswertung von Messwerten der Sensorkomponenten, wobei die Messwerte der Sensorkomponenten in wenigstens einem Messkoordinatensystem vorliegen, dass das Schutzfeld (9) in einem Benutzerkoordinatensystem vorgebbar ist, **dadurch gekennzeichnet, dass** in der Auswerteeinheit (8) oder in einer Eingabeeinheit das Schutzfeld (9) von dem Benutzerkoordinatensystem in das wenigstens eine Messkoordinatensystem umgerechnet wird, und dass für eine Erfassung von Objekten (7) innerhalb des Schutzfelds (9) in der Auswerteeinheit (8) ein Vergleich von Messwerten der Sensorkomponenten mit Schutzfelddaten des Schutzfeldes (9) in dem wenigstens einen Messkoordinatensystem durchgeführt wird.

2. Sensor (1) nach Anspruch 1, **dadurch gekennzeichnet, dass** bei einer Transformation von Messwerten von dem wenigstens einen Messkoordinatensystem in das Benutzerkoordinatensystem Messfehler korrigiert werden, wobei Messfehler in wenigstens einer Korrekturtabelle hinterlegt sind, welche in die Transformation der Messwerte von dem wenigstens einen Messkoordinatensystem in das Benutzerkoordinatensystem einbezogen ist.

3. Sensor (1) nach einem der Ansprüche 1 oder 2, **dadurch gekennzeichnet, dass** bei einer Koordinatentransformation Interpolationen durchgeführt werden.

4. Sensor (1) nach einem der Ansprüche 1 bis 3, **dadurch gekennzeichnet, dass** für diesen mehrere Schutzfelder (9) vorgebbar sind.

5. Sensor (1) nach einem der Ansprüche 1 bis 4, **dadurch gekennzeichnet, dass** das oder die Schutzfelder (9) über eine Eingabeeinheit eingebbar sind oder abhängig von Parameterwerten in der Auswerteeinheit (8) berechnet werden.

6. Sensor (1) nach einem der Ansprüche 1 bis 5, **dadurch gekennzeichnet, dass** ein Schutzfeld (9) kennzeichnende Schutzfelddaten von Schutzfeldgrenzen (10) gebildet sind.

7. Sensor (1) nach einem der Ansprüche 1 bis 6, **dadurch gekennzeichnet, dass** dieser ein optischer Sensor, insbesondere ein scannender Sensor (1) oder ein Flächendistanzsensor ist.

8. Sensor (1) nach einem der Ansprüche 1 bis 7, **dadurch gekennzeichnet, dass** dieser wenigstens einen Senderstrahlen emittierenden Sender (3), wenigstens einen Empfangsstrahlen empfangenden Empfänger (5) und eine Ablenkeinheit (6) zur periodischen Ableitung der Sendestrahlen in einem Abtastbereich (A) aufweist.

9. Sensor (1) nach einem der Ansprüche 1 bis 8, **dadurch gekennzeichnet, dass** in der Auswerteeinheit (8) abhängig von Messwerten der Sensorkomponenten ein Objektfeststellungssignal generiert wird.

10. Sensor (1) nach Anspruch 9, **dadurch gekennzeichnet, dass** das Objektfeststellungssignal ein binäres Schaltsignal ist, dessen Schaltzustände angeben, ob sich ein Objekt im Schutzfeld befindet oder nicht.

## Claims

1. A sensor (1) for detecting objects (7) within a protective field (9), having sensor components for detecting objects and having an evaluation unit (8) for evaluating measured values of the sensor components, the measured values of the sensor components being present in at least one measurement coordinate system, in that the protective field (9) can be preset in a user coordinate system, **characterised in that** the protective field (9) is converted from the user coordinate system into the at least one measurement coordinate system in the evaluation unit (8) or in an input unit, **in that** the protective field (9) is converted from the user coordinate system into the at least one measurement coordinate system in the evaluation unit (8) or in an input unit, and **in that** a comparison of measured values of the sensor components with protective field data of the protective field (9) in the at least one measurement coordinate system is carried out in the evaluation unit (8) for the detection of objects (7) within the protective field (9).

2. A sensor (1) according to claim 1, **characterised in that** measurement errors are corrected during a transformation of measured values from the at least one measurement coordinate system into the user coordinate system, measurement errors being stored in at least one correction table which is included in the transformation of the measured values from the at least one measurement coordinate system into the user coordinate system.

3. A sensor (1) according to one of claims 1 or 2, **characterised in that** interpolations are carried out during a coordinate transformation.

4. A sensor (1) according to one of claims 1 to 3, **characterised in that** several protective fields (9) can be preset for it.

5. A sensor (1) according to one of claims 1 to 4, **characterised in that** the protective field or fields (9) can be entered via an input unit or are calculated as a function of parameter values in the evaluation unit (8).

6. A sensor (1) according to one of claims 1 to 5, **characterised in that** protective field data characterising a protective field (9) are formed by protective field limits (10).

7. A sensor (1) according to one of claims 1 to 6, **characterised in that** this is an optical sensor, in particular a scanning sensor (1) or an area distance sensor.

8. A sensor (1) according to one of claims 1 to 7, **characterised in that** it has at least one transmitter (3) emitting transmitter beams, at least one receiver (5) receiving receiver beams and a deflection unit (6) for periodically deflecting the transmitter beams in a scanning range (A).

9. A sensor (1) according to one of claims 1 to 8, **characterised in that** an object detection signal is generated in the evaluation unit (8) as a function of measured values of the sensor components.

10. A sensor (1) according to claim 9, **characterised in that** the object detection signal is a binary switching signal, the switching states of which indicate whether an object is located in the protective field or not.

## Revendications

1. Capteur (1) pour la détection d'objets (7) dans un champ de protection (9), avec des composants de capteur pour la détection d'objets et avec une unité d'évaluation (8) pour l'évaluation des valeurs mesurées des composants de capteur, les valeurs mesurées des composants de capteur étant présentes dans au moins un système de coordonnées de mesure, en ce que le champ de protection (9) peut être préréglé dans un système de coordonnées de l'utilisateur, **caractérisé en ce que** le champ de protection (9) est converti du système de coordonnées de l'utilisateur dans au moins un système de coordonnées de mesure dans l'unité d'évaluation (8) ou dans une unité d'entrée, **en ce que** le champ de protection (9) est converti du système de coordonnées de l'utilisateur en au moins un système de coordonnées de mesure dans l'unité d'évaluation (8) ou dans une unité d'entrée, et **en ce qu'**une comparaison des valeurs mesurées des composants du capteur avec les données du champ de protection (9) dans au moins un système de coordonnées de mesure est effectuée dans l'unité d'évaluation (8) pour la détection d'objets (7) à l'intérieur du champ de protection (9).

2. Capteur (1) selon la revendication 1, **caractérisé en ce que** les erreurs de mesure sont corrigées lors d'une transformation des valeurs mesurées dudit au moins un système de coordonnées de mesure dans le système de coordonnées de l'utilisateur, les erreurs de mesure étant stockées dans au moins une table de correction qui est incluse dans la transformation des valeurs mesurées dudit au moins un système de coordonnées de mesure dans le système de coordonnées de l'utilisateur.

3. Capteur (1) selon l'une des revendications 1 ou 2, **caractérisé en ce que** les interpolations sont effectuées lors d'une transformation de coordonnées.

4. Capteur (1) selon l'une des revendications 1 à 3, **caractérisé en ce que** plusieurs champs de protection (9) peuvent être prédéfinis pour lui.

5. Capteur (1) selon l'une des revendications 1 à 4, **caractérisé par le fait que** le ou les champs de protection (9) peuvent être saisis via une unité de saisie ou sont calculés en fonction de valeurs de paramètres dans l'unité d'évaluation (8).

6. Capteur (1) selon l'une des revendications 1 à 5, **caractérisé en ce que** les données de champ de protection caractérisant un champ de protection (9) sont formées par des limites de champ de protection (10).

7. Capteur (1) selon l'une des revendications 1 à 6, **caractérisé en ce qu'**il s'agit d'un capteur optique, en particulier d'un capteur à balayage (1) ou d'un capteur de distance de zone.

8. Capteur (1) selon l'une des revendications 1 à 7, **caractérisé en ce qu'**il comporte au moins un émetteur (3) émettant des faisceaux d'émission, au moins un récepteur (5) recevant des faisceaux de réception et une unité de déviation (6) pour dévier périodiquement les faisceaux d'émission dans une zone de balayage (A).

9. Capteur (1) selon l'une des revendications 1 à 8, **caractérisé en ce qu'**un signal de détection d'objet est généré dans l'unité d'évaluation (8) en fonction des valeurs mesurées des composants du capteur.

10. Capteur (1) selon la revendication 9, **caractérisé en ce que** le signal de détection d'objet est un signal de commutation binaire dont les états de commutation indiquent si un objet se trouve ou non dans le champ de protection.
